(19) Europäisches Patentamt
European Patent Office
Office européen des brevets

(11) **EP 4 025 789 B1**

(12) **FASCICULE DE BREVET EUROPEEN**

(45) Date de publication et mention
de la délivrance du brevet:
**25.10.2023 Bulletin 2023/43**

(21) Numéro de dépôt: **20786014.9**

(22) Date de dépôt: **04.09.2020**

(51) Classification Internationale des Brevets (IPC):
*F04D 29/32* (2006.01)    *B64C 11/30* (2006.01)
*F04D 29/36* (2006.01)    *F01D 7/00* (2006.01)
*F01D 5/14* (2006.01)

(52) Classification Coopérative des Brevets (CPC):
**F01D 7/00; B64C 11/06; F01D 5/145; F04D 29/323;**
B64D 2027/005; F05D 2220/36; F05D 2250/241;
F05D 2250/711; F05D 2250/712; F05D 2250/713;
Y02T 50/60

(86) Numéro de dépôt international:
**PCT/FR2020/051535**

(87) Numéro de publication internationale:
**WO 2021/044107 (11.03.2021 Gazette 2021/10)**

(54) **MOYEU POLYSPHÉRIQUE DE TURBOMACHINE POUR PALES À CALAGE VARIABLE**

POLYSPHERISCHE NABE EINER TURBOMASCHINE FÜR VERSTELLBARE SCHAUFELN

POLYSPHERICAL HUB OF A TURBOMACHINE FOR ADJUSTABLE BLADES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.09.2019 FR 1909824**

(43) Date de publication de la demande:
**13.07.2022 Bulletin 2022/28**

(73) Titulaire: **SAFRAN AIRCRAFT ENGINES**
**75015 Paris (FR)**

(72) Inventeurs:
• **BINDER, Anthony**
**77550 MOISSY-CRAMAYEL (FR)**
• **LEBEAULT, Eva Julie**
**77550 MOISSY-CRAMAYEL (FR)**
• **SOULAT, Laurent**
**77550 MOISSY-CRAMAYEL (FR)**

(74) Mandataire: **Regimbeau**
**20, rue de Chazelles**
**75847 Paris Cedex 17 (FR)**

(56) Documents cités:
FR-A1- 3 006 988    FR-A1- 3 048 228
FR-A1- 3 053 998    US-A1- 2004 042 897
US-A1- 2018 073 375

# Description

## DOMAINE DE L'INVENTION

La présente invention concerne le domaine des systèmes de propulsion pour aéronefs, notamment des turbomachines, et plus particulièrement l'amélioration du rendement propulsif de tels systèmes de propulsion. L'invention a trait à un moyeu de turbomachine, à un ensemble de turbomachine et à une turbomachine à soufflante carénée ou non carénée, et porte plus précisément sur la géométrie d'un moyeu de turbomachine équipé d'aubes à calage variable.

## ETAT DE LA TECHNIQUE

Afin de réduire des émissions polluantes liées au transport aérien, il est primordial de chercher à améliorer toutes les efficacités des systèmes de propulsion des aéronefs, et plus particulièrement le rendement propulsif des systèmes de propulsion, c'est-à-dire l'efficacité avec laquelle l'énergie qui est communiquée à l'air traversant le moteur est convertie en effort de poussée utile pour propulser l'aéronef.

Le rendement propulsif d'un système de propulsion dépend en premier lieu d'éléments mécaniques liés aux parties basse pression du système propulsif, qui contribuent de manière immédiate à la génération de la poussée. Dans le cadre d'une turbomachine à double flux par exemple, le rendement propulsif dépend notamment de la turbine basse pression (aussi appelée turbine BP), du système de transmission basse pression, de la soufflante (en anglais « fan ») et de la veine secondaire guidant l'écoulement de l'air passant par la soufflante.

Afin d'améliorer le rendement propulsif, une solution connue consiste à chercher à diminuer le taux de compression de la soufflante, diminuant par là-même la vitesse d'écoulement en sortie du moteur et les pertes par énergie cinétique qui lui sont liées. Cependant, cela induit des variations de forte amplitude dans des paramètres de cycle thermodynamique de la turbomachine, entre les conditions de sol et de vol, en particulier en ce qui concerne les températures de fonctionnement turbine haute pression (aussi appelée turbine HP) et les taux de détente des tuyères primaire et secondaire.

Afin de compenser ces variations et de garantir un rendement propulsif important en vol et suffisant au sol, il est nécessaire d'utiliser un système de changement de calage pour les pales de la soufflante.

De plus, une diminution de vitesse d'écoulement en sortie de la turbomachine a pour conséquence que la partie basse pression doit nécessairement traiter un débit massique d'air du flux secondaire plus important pour assurer un même niveau de poussée, fixé par les caractéristiques de l'aéronef.

Ceci conduit donc à une augmentation du taux de dilution de la turbomachine, et à une augmentation de débit du flux secondaire, qui a pour effet direct de nécessiter l'augmentation du diamètre de la soufflante. Par conséquent, cette solution nécessite d'augmenter les dimensions externes du carter de rétention entourant la soufflante et d'augmenter les dimensions de la nacelle constituant l'enveloppe aérodynamique du carter en question. Outre les aspects dimensionnels, l'augmentation du taux de dilution pénalise fortement la masse du système de propulsion, via notamment une augmentation très significative de la masse du carter de soufflante, dimensionné pour la rétention centrifuge en cas d'éjection d'aubage.

Il est ainsi constaté que les taux de dilution les plus élevés, bien que conduisant à de meilleurs rendements propulsifs, s'accompagnent de pénalités de masse, de traînée et de difficultés d'installation sous aile importantes, de sorte que la majeure partie du gain espéré est éclipsée par ces éléments fortement pénalisants.

Afin de tenter de minimiser les effets négatifs, une première solution consiste à simplifier et alléger la structure du carénage et de la nacelle. Il s'agit par exemple de ne lui conférer plus qu'une fonction de frontière aérodynamique autour de la soufflante en supprimant la fonction de réalisation d'inversion de poussée (en anglais fonction « reverse »), réalisée par des portes ou des grilles d'inversion de poussée au niveau du carénage entourant la soufflante, et en raccourcissant fortement l'entrée d'air, c'est-à-dire la partie réalisant la fonction de guidage de l'écoulement en amont de la soufflante, et la tuyère secondaire qui réalise la fonction de contrôle du champ de pression en aval de la soufflante (tuyère secondaire).

La première solution propose une architecture de turbomachine comprenant une soufflante à très faible rapport de pression, un système de changement de calage pour les pales et une nacelle de longueur fortement réduite présentant une entrée d'air et une tuyère secondaire de longueur réduite et n'intégrant plus de grilles d'inversion de poussée.

L'introduction d'un mécanisme de changement de calage pour les pales permet un pilotage du point de fonctionnement de la soufflante selon les conditions de vol.

Plusieurs problématiques peuvent toutefois apparaitre lorsque l'on prévoit un calage variable pour les pales de la soufflante.

Une découpe classique de tête de pale, complémentaire d'une veine cylindrique ou tronconique entraîne, entre la tête de pale et le carénage, des jeux très importants, qui sont nécessaires pour permettre la variation de calage sans contact, mais qui entraînent une perte de rendement non négligeable, en réduisant notamment la qualité de l'écoulement aérodynamique sur la pale. De même, un jeu peut être nécessaire au niveau du pied de pale pour permettre une rotation de la pale.

Ces pertes de rendement ne sont pas acceptables, en particulier dans le cas de turbomachine à rotor de soufflante lent et à très faible rapport de pression.

Par ailleurs, habituellement, dans une turbomachine, une surface du moyeu en rotation sur laquelle sont fixées les pales décrit un arc de cercle, de sorte que lorsque le calage est modifié, une discontinuité importante peut se former, sous forme d'une marche.

Cette marche est également source de perte de rendement.

Une deuxième solution permettant d'atteindre des taux de dilutions encore plus importants, est de retirer complètement le carter et d'utiliser des configurations à hélices. Des architectures propulsives ainsi constituées portent le nom de turbopropulseur (cas d'un rotor basse pression unique non caréné, qualifié d'hélice), ou de « open rotor » selon la terminologie anglosaxonne couramment utilisée (cas de deux rotors basse pression contrarotatifs, qualifiés d'hélices contra rotatives).

Cette architecture alternative, si elle permet de s'affranchir des contraintes de masse et de traînée de frottement du carénage de la partie secondaire désormais inexistant, pose toutefois d'autres problèmes. L'absence de carénage autour de la partie basse pression rend le fonctionnement aérodynamique du rotor très sensible aux variations de conditions de vol (en particulier de vitesse), et limite la vitesse de vol maximale admissible par l'avion.

Afin de pouvoir faire fonctionner l'hélice à son maximum de rendement quelques soient les conditions, la deuxième solution propose une architecture comprenant une hélice à calage variable à régime lent, et une absence de carter.

L'utilisation de pales à calage variable, pourtant nécessaire, ajoute une difficulté technique à la deuxième architecture proposée, car, comme expliqué précédemment, l'utilisation de calage variable rend difficile la gestion des marches et jeux entre chaque pale et le moyeu en rotation, lorsque le calage de la pale varie. Cela est notamment le cas sur les architectures d'hélice (ou de fan à calage variable) à l'amont suivies par une entrée d'air pour laquelle l'écoulement doit être le moins distordu possible. Cette problématique de distorsion peut être à considérer aussi dans le cadre d'une soufflante à calage variable dans un moteur double flux dont le flux secondaire est guidé dans un carter.

Le documents FR3048228 et US2018/073375 divulguent des exemples de jonction de plate-formes d'aubes à calage variable avec des moyeux correspondants.

## EXPOSE DE L'INVENTION

Un but de l'invention est de remédier au moins en partie aux inconvénients précités en proposant un moyeu de turbomachine comprenant une pluralité de plateformes destinées à recevoir des pales à calage variable, supprimant les marches et les jeux lors d'une rotation du calage entre un pied de pale et un moyeu sur lequel la pale est fixée, en garantissant les performances d'écoulement aérodynamique au niveau du moyeu. Les plateformes sont destinées à recevoir des pales à calage variable par exemple en étant traversées par lesdites pales par exemple via une trouée centrale dans lequel passe un tronçon de pied de pale. Chaque plateforme peut dans ce cas comprendre au moins une pièce qui est distincte de sa pale correspondante et qui est installée autour de ladite pale. On parle alors de plateforme dite « rapportée ». En alternative, chaque plateforme peut être une extension du pied de la pale correspondante, c'est-à-dire que la plateforme et la pale associée sont réalisées d'un seul tenant. On parle alors de plateforme dite « intégrée ».

Ainsi, l'invention concerne, selon un premier aspect, un moyeu de turbomachine, destiné à être monté en rotation selon un axe longitudinal de ladite turbomachine, ledit moyeu comprenant

> un corps principal disposé autour de l'axe longitudinal, dont une surface externe présente une pluralité de logements ;
> une pluralité de plateformes comprenant une surface externe délimitée par un bord extérieur circulaire de rayon r, chaque plateforme étant disposée dans un logement correspondant parmi la pluralité de logements du corps principal, et destinée à recevoir une pale à calage variable selon un axe de changement de calage, ladite plateforme étant centrée et mobile en rotation selon ledit axe de changement de calage ;
> caractérisé en ce, pour chaque plateforme,
> au moins une partie de la surface externe de la plateforme et du corps principal du moyeu comprend une courbure définie par une même portion de sphère de rayon R et de centre C, l'au moins une partie étant située au niveau du bord extérieur de la plateforme, dans une zone de jonction entre la plateforme et le corps principal du moyeu,
> le centre C de la sphère étant situé sur l'axe de changement de calage en dehors d'une zone hémisphérique délimitée entre l'axe longitudinal et la surface externe de la plateforme.

La zone de jonction entre la plateforme et le corps principal du moyeu se comprend par le raccordement de la plateforme avec le corps principal du moyeu. Ainsi, cette zone est en jonction de la plateforme et du corps principal du moyeu, à continuité de surface de la plateforme avec le corps principal du moyeu. Autrement dit, il s'agit d'une zone de jonction de la plateforme avec le corps principal du moyeu ou encore une zone de jonction au raccordement de la plateforme et du corps principal du moyeu.

L'invention selon le premier aspect est avantageusement complétée par les caractéristiques suivantes, prises seules ou en une quelconque de leur combinaison techniquement possible :

- la surface externe de la plateforme est entièrement définie par la portion de sphère de rayon R et de centre C ;

- la zone de jonction est définie par une projection de la zone de jonction dans un plan orthogonal à l'axe de changement de calage, la projection étant une couronne centrée sur l'axe de changement de calage et délimitée entre un cercle de rayon interne $r_i$ inférieur au rayon r du bord extérieur de la plateforme, et un cercle de rayon externe $r_e$ supérieur au rayon r du bord extérieur de la plateforme ;
- la surface externe de chaque plateforme comprend une partie centrale présentant une courbure opposée à la courbure de la surface externe dans la zone de jonction, une projection de la partie centrale dans le plan orthogonal à l'axe de changement de calage étant délimitée par le cercle de rayon interne $r_i$ ;
- le centre C de la sphère définissant la surface externe de chaque plateforme est situé à l'intersection de l'axe de changement de calage et de l'axe longitudinal ;
- le corps principal du moyeu comprend une pluralité de zones intermédiaires situées entre deux zones de jonctions avec des plateformes adjacentes, chaque zone intermédiaire ayant une surface externe présentant une courbure opposée à la courbure de la surface externe du corps principal dans la zone de jonction ;

L'invention concerne selon un deuxième aspect, un ensemble de turbomachine comprenant un moyeu selon le premier aspect de l'invention et une pluralité de pales à calage variable configurées pour être raccordées au corps principal du moyeu par l'intermédiaire de la pluralité de plateformes ;

L'invention selon le deuxième aspect est avantageusement complétée par les caractéristiques suivantes, prises seules ou en une quelconque de leur combinaison techniquement possible :

- chaque plateforme de la pluralité de plateformes est réalisée d'une pièce avec la pale correspondante parmi la pluralité de pales ;
- chaque plateforme comprend au moins deux pièces distinctes, destinées à entourer une partie de pied de la pale correspondante ;
- la surface externe de chaque plateforme est complémentaire de la forme de la pale correspondante, de sorte que la plateforme est en contact avec la pale du bord d'attaque de la pale au bord de fuite de la pale, et soit également en contact avec l'extrados et l'intrados de la pale.

L'invention concerne selon un troisième aspect une turbomachine à soufflante carénée ou non carénée, comprenant un ensemble selon le deuxième aspect de l'invention.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

La figure 1 illustre de façon schématique une vue en coupe d'une turbomachine à soufflante carénée.

La figure 2 illustre de façon schématique une vue de face et tourné selon 90 d'un ensemble de turbomachine comprenant un moyeu selon un exemple de réalisation.

La figure 3A illustre de façon schématique une vue de côté d'une pale à calage variable raccordée à un moyeu par une plateforme selon un premier exemple de réalisation.

La figure 3B illustre de façon schématique une vue de côté d'une pale à calage variable raccordée à un moyeu par une plateforme selon un deuxième exemple de réalisation.

La figure 3C illustre de façon schématique une vue de côté d'une pale à calage variable raccordée à un moyeu par une plateforme selon un troisième exemple de réalisation.

La figure 4 illustre de façon schématique une vue de dessus d'une pale à calage variable raccordée à un moyeu par une plateforme.

La figure 5 illustre de façon schématique une vue de côté d'une pale à calage variable raccordée à un moyeu polysphérique par une plateforme.

La figure 6A illustre de façon schématique une vue de face d'un ensemble de turbomachine comprenant un moyeu polysphérique et une pluralité de pales à calage variable selon un premier exemple de réalisation.

La figure 6B illustre de façon schématique une vue de face d'un ensemble de turbomachine comprenant un moyeu polysphérique et une pluralité de pales à calage variable selon un deuxième exemple de réalisation.

La figure 7 illustre de façon schématique une vue de dessus de la pale à calage variable de la figure 4, dans deux positions de calage différentes.

La figure 8 illustre de façon schématique une vue de côté et une vue de dessus de la pale à calage variable raccordée au moyeu polysphérique de la figure 5.

La figure 9 illustre de façon schématique une vue de côté de la pale à calage variable raccordée au moyeu polysphérique dans un autre exemple de réalisation.

Sur l'ensemble des figures, les éléments similaires portent des références identiques.

## DESCRIPTION DETAILLEE DE L'INVENTION

On considère un système de propulsion pour aéronef de type turbomachine, comprenant un arbre moteur monté en rotation selon un axe longitudinal de rotation X, correspondant à un axe de symétrie de la turbomachine.

Comme expliqué précédemment, la turbomachine peut avoir selon un premier exemple de réalisation une architecture à soufflante carénée, ou selon un deuxième exemple de réalisation une architecture à hélice non carénée (en anglais « open rotor »).

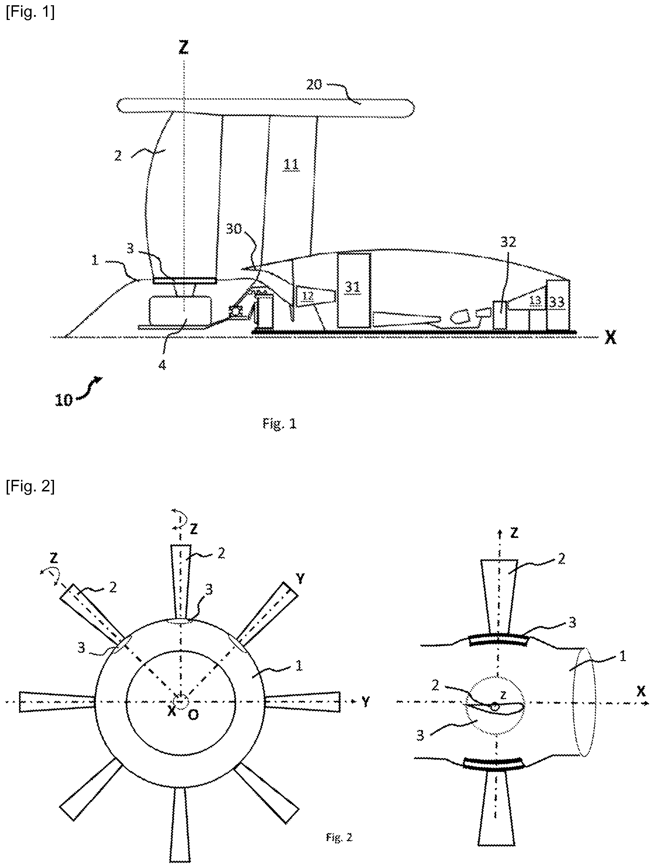

La **figure 1** illustre le premier exemple d'architecture de turbomachine 10 sur laquelle peut être utilisée la solution au problème technique posé. La turbomachine 10 a une architecture à soufflante carénée à très haut taux de dilution (en anglais, architecture « Ultra High By-Pass Ratio » ou UHBR). Elle comprend une nacelle 20, compacte et en particulier de longueur réduite. Notamment, la nacelle 20 de longueur réduite intègre une entrée d'air en amont et une tuyère secondaire en aval de la soufflante de longueur réduite. Cette nacelle n'intègre pas de mécanisme d'inversion de poussée. Elle a pour fonctions principales d'assurer le carénage aérodynamique de la turbomachine 10 et la rétention de pales 2 de la soufflante et est uniquement dimensionnée à cet effet.

Une structure 30 définit l'extérieur d'une veine primaire, une veine secondaire étant définie entre la nacelle et l'extérieur de cette structure 30. La structure 30 comprend un carter inter-compresseur 31, disposé entre un compresseur basse pression 12 et un compresseur haute pression, un carter inter-turbine 32, disposé entre une turbine basse pression 13 et une turbine haute pression, ainsi qu'un carter d'échappement 33. Un redresseur 11 est interposé entre la nacelle 20 et la structure 30 et permet de tenir ladite nacelle 20.

Dans un exemple de réalisation possible, une partie de la nacelle 20 peut être rendue commune avec une surface déjà existante sur l'aéronef, comme par exemple l'intrados de la voilure.

Quelle que soit l'architecture considérée, la turbomachine 10 comprend des pièces montées en rotation sur l'axe de rotation X, appelée rotor. Le rotor comprend un moyeu entrainant en rotation autour de l'axe X une pluralité de pales 2 à calage géométrique variable. Un mécanisme 4 permet la rotation de chacune des pales 2 autour d'un axe sensiblement radial Z aussi appelé axe d'empilage Z ou axe de changement de calage Z. On précise que chaque pale possède son propre axe de changement de calage. On entendra par « sensiblement radial » que l'axe de rotation Z de la pale 2 est orthogonal à l'axe longitudinal de rotation X, ou peut présenter un décalage angulaire inférieur à quelques degrés avec un axe orthogonal à l'axe longitudinal de rotation X.

Selon une utilisation classique des termes suivants, chaque pale 2 présente un bord d'attaque, faisant face à un flux d'air traversant la turbomachine 10, et un bord de fuite opposé selon la direction longitudinale X, le segment de droite reliant le bord de fuite au bord d'attaque étant définie comme la corde considérée à un emplacement radial choisit radialement sur l'axe radial Z.

La pale 2 comprend une face appelée extrados s'étendant radialement, au niveau de laquelle a lieu une dépression, et une face opposée appelée intrados, au niveau de laquelle a lieu une surpression.

On entendra par calage géométrique l'angle formé par la corde du profil de la pale 2 et le plan de rotation du rotor, défini comme un plan orthogonal à l'axe de rotation X de la turbomachine 10.

Par la suite, on entendra par « surface externe », une surface extérieure par rapport à l'axe longitudinal de rotation X, notamment le long de laquelle peuvent circuler des flux d'air.

De manière classique, les pales 2 à calage variable se situent au-dessus du moyeu de forme sensiblement cylindrique autour de l'axe de rotation X. Les pales 2 peuvent être typiquement équiréparties sur une surface externe du moyeu 1, le long de sa circonférence.

La **figure 2** illustre schématiquement un exemple de réalisation du moyeu dans le plan de rotation du rotor $(O,\vec{Y},\vec{Z})$, et dans un plan $(O,\vec{X},\vec{Z})$ tangent à l'axe de rotation X.

Le moyeu comprend un corps principal 1 disposé autour de l'axe longitudinal X. Le corps principal du moyeu 1 est fixe dans le repère de rotation de l'arbre moteur (repère tournant), c'est-à-dire qu'il est destiné à être entrainé en rotation par l'arbre moteur autour de l'axe longitudinal de rotation X.

Le corps principal du moyeu 1 est généralement constitué d'un seul tenant. Le corps principal du moyeu 1 comprend une pluralité de logements. De préférence, les logements sont répartis sur la circonférence externe du corps principal du moyeu 1 de manière concentrique à l'axe longitudinal de rotation X. Chaque logement peut avoir une forme sensiblement circulaire, c'est-à-dire avoir un bord intérieur délimité par un cercle de rayon r.

Le moyeu comprend une pluralité de plateformes (3), chacune disposées dans un logement correspondant parmi la pluralité de logements du corps principal 1.

Selon l'exemple de la **figure 2,** on comprendra que chaque plateforme (3) est destinée à recevoir une pale à calage variable (2) correspondante, et est mobile en rotation selon un axe radial (Z,Z') spécifique. Ainsi, chaque plateforme (3) est destinée à être solidaire d'un pied de la pale à calage variable (2) correspondante, et à tourner avec la pale (2) en fonction du calage désiré.

Dans un exemple de réalisation, chaque plateforme (3) peut être reliée fixement à un mécanisme 4 d'actionnement du calage variable (en anglais « pitch control mecanism » ou PCM), relié par une liaison pivot au corps principal du moyeu 1.

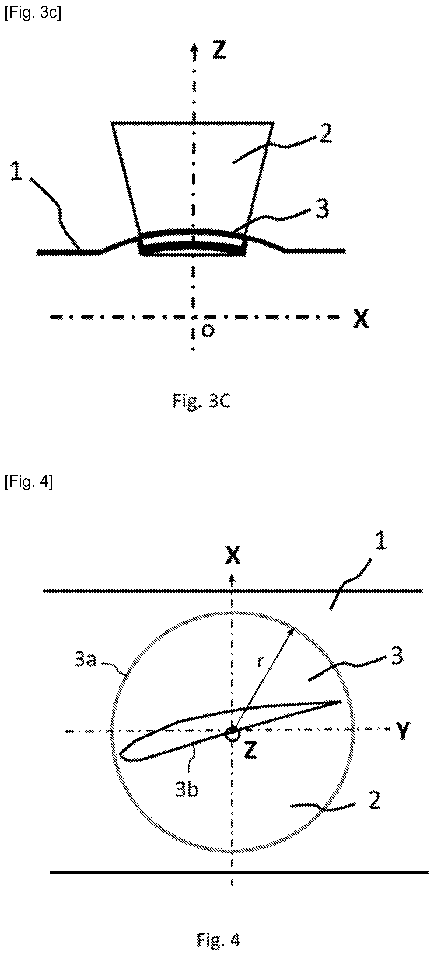

La **figure 4** illustre schématiquement une vue de dessus d'un exemple de réalisation de la plateforme 3, dans un plan orthogonal à l'axe de changement de calage Z. Chaque plateforme 3 comprend une surface externe délimitée par un bord extérieur 3a circulaire de rayon r. Le bord extérieur circulaire de rayon r forme une jonction entre le corps principal du moyeu 1 et la plateforme 3.

La plateforme 3 comprend une trouée délimitée au moins par un bord intérieur 3b de la plateforme, destiné à être en appui direct avec le pied de la pale 2, ou de manière alternative, à être en contact avec le pied de la pale 2 par l'intermédiaire d'un joint. De manière avantageuse, le joint, réalisé préférentiellement en matière élastomère, peut se présenter sous la forme d'un cordon collé sur ou assemblé à la plateforme, de largeur équivalente au jeu existant entre le pied de pale et la plateforme.

Chaque plateforme 3 n'est pas destinée à être fixe dans le repère de rotation de l'arbre moteur, mais est montée en rotation par rapport à l'axe de changement de calage Z. Chaque plateforme 3 est donc montée mobile en rotation par rapport à l'axe de changement de calage Z, et est centrée sur l'axe de changement de calage Z.

Le centre du cercle de rayon r délimitant le bord extérieur 3a dans le plan orthogonal à l'axe de changement de calage Z est disposé sur l'axe de changement de calage Z, comme illustré sur la **figure 4**. Cela permet avantageusement de limiter le jeu entre la plateforme 3 et le corps principal du moyeu 1, et ce quelque que soit le calage de la pale 2.

Comme il va être détaillé par la suite, chaque plateforme 3 est conçue pour assurer une continuité géométrique entre la pale 2 et le corps principal du moyeu 1, sur toute la plage de calage de la pale 2, tout en garantissant les performances aérodynamiques du moyeu. De préférence, la forme de la surface externe de chaque plateforme 3 et du corps principal du moyeu 1 permet de limiter les perturbations de la couche limite au niveau de la plateforme 3, et plus généralement de limiter des perturbations inutiles du flux d'air.

Afin de conserver la continuité du moyeu à l'intersection entre la plateforme 3 et du corps principal du moyeu 1, c'est-à-dire le long du bord extérieur 3a de la plateforme 3, les plateformes 3 et le corps principal du moyeu 1 sont poly-sphériques.

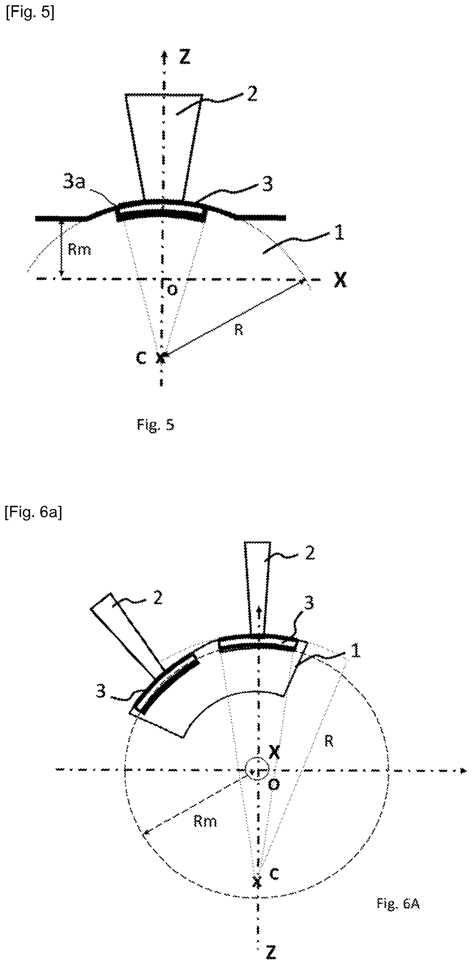

Comme cela est illustré schématiquement sur la **figure** 5, on entendra par poly-sphériques, qu'au moins une partie de la surface externe de la plateforme 3 et du corps principal du moyeu 1 comprend une courbure définie par une même portion de sphère de rayon R et de centre C, dont l'intersection avec le plan de la figure 5 est représentée en trait pointillé fin. La partie de la surface externe du moyeu est située au niveau du bord extérieur 3a de chaque plateforme 3, dans une zone de jonction entre la plateforme 3 et le corps principal du moyeu 1. On précise ici que la courbure est l'inverse du rayon et est donc inversement proportionnelle. Un faible rayon implique une forte courbure.

Pour chaque plateforme 3, le centre C de la sphère se situe sur l'axe de changement de calage Z, en dehors d'une zone hémisphérique délimitée entre l'axe longitudinal (X) et la surface externe de la plateforme 3.

Ainsi, le bord extérieur 3a circulaire correspond à un contour apparent de la sphère de centre C et de rayon R, c'est-à-dire le cercle correspondant à l'intersection de la sphère avec le plan orthogonal à l'axe de changement de calage Z illustré sur la **figure** 4. La zone de jonction s'étend sur la sphère de part et d'autre de ce contour apparent. Il y a continuité de la surface externe de la plateforme 2 avec la surface externe du corps principal du moyeu 1 dans la zone de jonction, et ce quel que soit le calage de la plateforme 2.

Le rayon R peut être imposé par une position axiale minimale ou maximale de la plateforme 3. Comme illustré notamment sur la **figure** 5, le rayon R peut être différent du rayon du moyeu Rm à cette position axiale.

La **figure 6A** illustre un premier exemple de réalisation, dans lequel le centre C définissant la sphère délimitant la zone de jonction peut se situer en dessous de la zone hémisphérique délimitée entre l'axe longitudinal (X) et la surface externe de la plateforme 3. Comme illustré dans le plan (O,Y,Z), le centre C se trouve sur l'axe Z, en dessous de l'intersection O entre l'axe longitudinal de rotation X et l'axe de changement de calage Z. Le cercle de centre O en traits pointillés long représente la section sensiblement cylindrique du moyeu. Les traits de construction et le cercle de centre C en traits pointillés fin illustrent la section de la portion de sphère définissant une partie de la surface externe de la plateforme 3 et du corps principal du moyeu 1 dans la zone de jonction.

Dans le premier exemple de réalisation, chaque plateforme (3,3') a une forme sensiblement convexe. Dans le repère $(O, \vec{Y}, \vec{Z})$, on a $\overrightarrow{OC} = -||\overrightarrow{OC}||\vec{z}$. Dans le premier exemple illustré, on a $0 < ||\overrightarrow{OC}|| < Rm$, cependant, le centre C peut être en dehors du cercle de centre O, de sorte que $||\overrightarrow{OC}|| \geq Rm$.

Dans un deuxième exemple de réalisation (non illustré), correspondant à un cas particulier du premier exemple de réalisation, le centre C de la sphère définissant en partie la surface externe de la plateforme 3 se situe à l'intersection O entre l'axe longitudinal de rotation X et l'axe de changement de calage X. On parle alors de moyeu sphérique.

Par sphérique on considère qu'au moins une partie de la surface externe de chaque plateforme 3 et la surface externe du corps principal du moyeu 1, dans la zone de jonction au niveau du bord extérieur de la plateforme 3a, sont définies par une portion de sphère de centre O. Dans ce cas particulier, les centres de chaque sphère définissant la surface externe d'une plateforme (3,3') sont confondus. Le rayon R de la sphère est imposé par la position de l'intersection entre l'axe de rotation du moyeu (axe longitudinal X) et l'axe de rotation de la plateforme 3 (axe de changement de calage Z).

De préférence, l'ensemble du corps principal du moyeu 1 et des plateformes 3 suit la définition de veine sphérique au niveau des pales 2. Les plateformes 3 peuvent être ensuite réalisées par découpe du moyeu 1 autour de chaque axe de changement de calage Z.

Le deuxième exemple de réalisation présente l'avantage de conserver un moyeu à symétrie cylindrique tout en limitant les courbures. En effet, pour chaque position axiale de la zone des aubages, cette solution permet d'obtenir des sections du moyeu circulaires et ainsi limiter les courbures dans la direction azimutale. Une faible courbure permet de réduire les perturbations aérodynamiques en pied de pale 2, et d'éviter notamment des accélérations d'un flux d'air dans ces zones de jonction. Les pertes de rendement propulsif sont ainsi réduites.

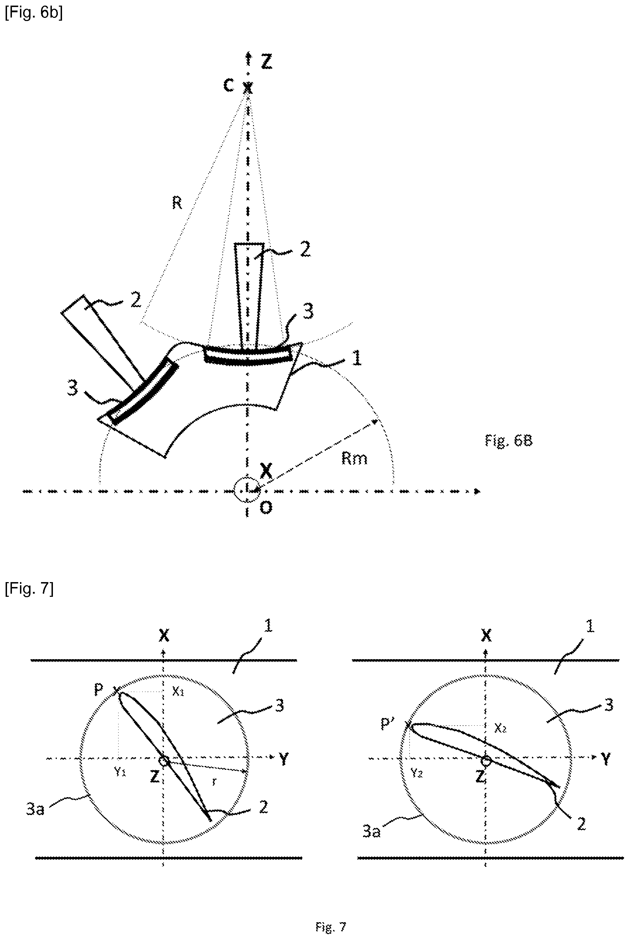

La **figure 6B** illustre un troisième exemple de réalisation, dans lequel le centre C définissant la sphère de la plateforme 3 peut se situer au-dessus de la zone hémisphérique délimitée entre l'axe longitudinal (X) et la surface externe de la plateforme 3, sur l'axe de changement de calage Z. Le centre C se situe au-delà du cercle du rayon Rm délimitant la forme sensiblement circulaire du moyeu, représentée en traits pointillés long. Les traits de construction et le cercle de centre C en traits pointillés fin illustrent la section de la portion de sphère définissant une partie de la surface externe de la plateforme 3 et du moyeu 1.

Dans le troisième exemple de réalisation, chaque plateforme 3 a une forme sensiblement concave. Dans le repère $(O, \vec{Y}, \vec{Z})$, on a $\overrightarrow{OC} = ||\overrightarrow{OC}|| \, \vec{z}$, et $||\overrightarrow{OC}|| > Rm$.

Ainsi, au moins une portion de chaque plateforme 3 et du corps principal du moyeu 1 au niveau du bord extérieur 3a dans la zone de jonction est défini selon une sphère de rayon R et de centre C, le centre C étant disposé sur l'axe de changement de calage Z de la plateforme 3, en dehors de la demi-sphère de centre 0 et de rayon Rm, définie dans l'espace $\{x^2 + y^2 + z^2 = Rm^2 | z > 0\}$.

Cela permet de limiter avantageusement les courbures de la surface externe de la plateforme 3 et du corps principal du moyeu 1. En effet, si dans le repère $(O, \vec{Y}, \vec{Z})$, on a $\hat{O}C = OC = \vec{z}$, et $0 < OC < Rm$, la concavité ou la convexité de la surface extérieure de la plateforme 3 sera importante, ce qui peut entrainer des perturbations aérodynamiques d'un flux d'air traversant la turbomachine 10, et par conséquent créer une perte de rendement propulsif.

Cette définition permet qu'un point situé sur le bord extérieur 3a de chaque plateforme 3, sera toujours au même rayon R sur cette portion de sphère malgré la rotation du calage de la pale 2 associée autour de l'axe Z.

La **figure 7** illustre schématiquement les deux positions angulaires ou calage différents de la pale 2 associée à la plateforme 3 par rapport au corps principal du moyeu 1, dans le plan orthogonal à l'axe de changement de calage Z de la figure 4.

On note (Xi, Yi, Zi) les coordonnées cartésiennes d'un point P quelconque situé sur le bord extérieur de la plateforme d'axe de changement de calage Z, dans le repère orthogonal direct $(O, \vec{X}, \vec{Y}, \vec{Z})$. On note $(X_1, Y_1, Z_1)$ les coordonnées du point P avant variation du calage, et $(X_2, Y_2, Z_2)$ les coordonnées du point P', correspondant à la transformation du point P par une rotation autour de l'axe de changement de calage Z, après variation du calage.

Lors d'une variation du calage, la plateforme 3 sphérique effectue une rotation autour de l'axe Z, de sorte qu'en tout point du bord extérieur 3a de la plateforme 3, formant un cercle centré sur l'axe de changement de calage Z, la coordonnée selon l'axe de changement de calage Z ne varie pas. On a donc $Z_1 = Z_2$.

Dans le plan $(O, \vec{X}, \vec{Y})$ illustré sur la **figure 7,** le point P effectue une rotation autour de l'axe de changement de calage Z de sorte que $X_1^2 + Y_1^2 = X_2^2 + Y_2^2$.

Ainsi le rayon R' par rapport au centre C de la sphère du point P' après rotation sera identique au rayon R. En effet,

$$R' = \sqrt{X_2^2 + Y_2^2 + Z_2^2} = \sqrt{X_1^2 + Y_1^2 + Z_1^2}$$

. Le rayon R' n'aura donc pas changé et sera identique à celui du corps principal du moyeu 1 à cette position, ce qui permet d'assurer la continuité de surface externe du moyeu donc de la veine et de ne pas créer de marches.

Dans un exemple de réalisation de la plateforme 3, par exemple représenté sur les figures 5 et 6, la surface externe est entièrement définie par la portion de sphère de rayon R et de centre C.

Afin que la continuité de la surface externe du moyeu soit assurée, il n'est cependant pas nécessaire que toute la surface externe de chaque plateforme 3 soit définie par la sphère de centre C et de rayon R.

De même, il n'est pas nécessaire que toute la surface externe du corps principal du moyeu 1 entre les plateformes (3,3') soit définie par une sphère.

Dans un exemple de réalisation, le corps principal du moyeu 1 peut comprendre une pluralité de zones intermédiaires situées entre deux zones de jonctions avec des plateformes 3 adjacentes, chaque zone intermédiaire ayant une surface externe présentant une courbure opposée à la courbure de la surface externe du corps principal 1 dans la zone de jonction. De manière préférentielle, seulement une portion de chaque plateforme 3 et du moyeu 1 est sphérique.

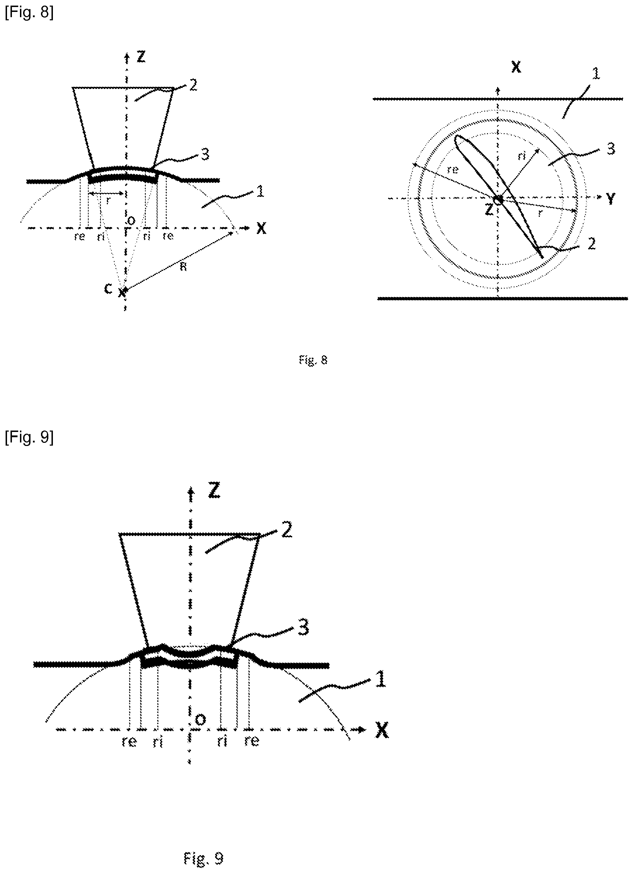

Comme illustré schématiquement sur la **figure 8,** on peut définir deux rayons limites : un premier rayon interne ri et un deuxième rayon externe re. Les rayons interne ri et externe re délimitent la zone de jonction dans laquelle les surfaces externes du corps principal du moyeu 1 et de la plateforme 3 doivent à minima être définies par la sphère de centre C. Cette zone de jonction permet de garantir une continuité de la veine au niveau du bord extérieur 3a délimitant l'interface entre la plateforme 3 et le corps principal du moyeu 1.

La figure 8 illustre notamment une vue de dessus de la plateforme 3, dans le plan orthogonal à l'axe de changement de calage Z de la figure 5. Cette vue illustre la projection de la zone de jonction dans ce plan orthogonal à l'axe de changement de calage (Z), et permet de définir la zone de jonction simplement. On note r le rayon de la plateforme dans le plan $(O, \vec{X}, \vec{Y})$, de sorte

que $ri < r < re.$ La projection dans ce plan est dans cet exemple une couronne centrée sur l'axe de changement de calage (Z) et délimitée entre un cercle de rayon interne ri inférieur au rayon r du bord extérieur de la plateforme 3, et un cercle de rayon externe re supérieur au rayon r du bord extérieur de la plateforme 3.

La partie sphérique du corps principal du moyeu 1 et de la plateforme 3 doit permettre la continuité au moins en courbure du moyeu dans la zone comprise entre les rayons ri et re. Dans un exemple de réalisation préférentiel, la surface externe de chaque plateforme 3 comprend une partie centrale présentant une courbure opposée à la courbure de la surface externe dans la zone de jonction.

Afin de garantir la continuité, la projection de la partie centrale dans le plan orthogonal à l'axe de changement de calage (Z) peut être délimitée par le cercle de rayon interne ri.

La **figure 9** illustre un tel exemple de réalisation dans lequel la surface externe de la plateforme 3 à l'intérieur du cercle définit par ri a une forme sensiblement concave, alors que la zone de jonction entre ri et re est convexe.

Il est avantageux d'adapter la géométrie de cette zone interne pour gérer la vitesse de l'écoulement d'un flux d'air en pied de pale 2. Cela n'a pas de conséquence sur la continuité en courbure à l'interface plateforme 3-corps principal du moyeu 1.

De préférence, la géométrie de la surface externe du corps principal du moyeu 1 en dehors du cercle délimité par re et de centre sur l'axe de changement de calage Z peut être adaptée, de sorte à gérer la vitesse de l'écoulement d'un flux d'air en pied de pale 2.

Il est par exemple possible d'augmenter la section de passage en pied de pale 2 en creusant le corps principal du moyeu 1 entre deux plateformes 3 successives. Cela permet avantageusement de diminuer le mach relatif sur les profils, ce qui est bénéfique pour la performance de la turbomachine.

De préférence, la géométrie du corps principal du moyeu 1 en dehors du cercle délimité par re et de centre sur l'axe de changement de calage Z peut être adaptée, en augmentant le rayon Rm à proximité de l'axe de changement de calage Z. Cela permet de faciliter l'intégration du mécanisme 4 de changement de calage (PCM).

Dans l'exemple illustré sur la figure 9, le corps principal du moyeu 1 comprend une zone en dehors de la zone de jonction de forme concave, alors que la zone de jonction est convexe.

Ainsi, la solution technique proposée permet de supprimer la marche existant dans l'état de la technique entre la plateforme 3 et le corps principal du moyeu 1, en garantissant la continuité en courbure de la veine lors de la rotation de calage, donc quel que soit le calage de la pale 2. Il est ainsi possible de garantir de bonnes performances aérodynamiques et d'améliorer le rendement propulsif de la turbomachine 10.

Selon un aspect, on considère un ensemble de turbomachine comprenant un moyeu polysphérique ou sphérique comme décrit précédemment, et une pluralité de pales 2 à calage variable configurées pour être raccordées au corps principal du moyeu 1 par l'intermédiaire de la pluralité de plateformes 3.

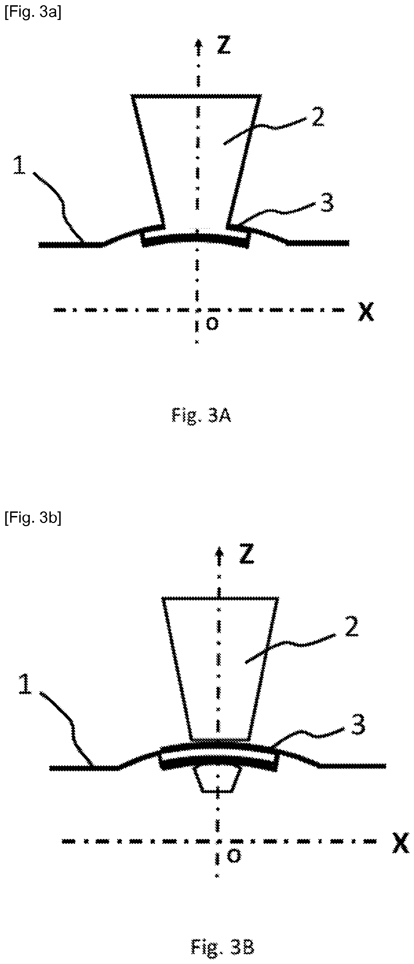

Les **figures 3A**, **3B** et **3C** illustrent schématiquement différents exemples de réalisation d'assemblage de la pale 2 avec la plateforme 3.

Dans un exemple de réalisation illustré sur la **figure 3A,** la plateforme 3 peut être une extension du pied de la pale 2, c'est-à-dire que la plateforme 3 et la pale 2 associée sont réalisées d'un seul tenant. On parle alors de plateforme dite « intégrée ».

Dans un exemple de réalisation alternatif, la plateforme 3 peut comprendre au moins une pièce distincte de la pale 2 et installée autour de la pale 2. On parle alors de plateforme dite « rapportée ».

De préférence, la plateforme 3 rapportée peut-être formée d'au moins deux pièces distinctes destinées à entourer une partie de pied de la pale 2 correspondante.

Par exemple, la plateforme 3 peut comprendre une première pièce destinée à être en contact avec l'intrados de la pale 2 et une deuxième pièce destinée à être en contact avec l'extrados de la pale 2. Cela permet avantageusement de faciliter l'assemblage de la plateforme 3 dans l'orifice correspondant du moyeu 1.

Selon un exemple de réalisation de plateforme 3 illustré schématiquement sur la **figure 3B,** le pied de la pale 2 est configuré pour dépasser sous la plateforme 3, et pour se prolonger sous le moyeu 1 sous la forme d'une extrusion. Dans cet exemple de réalisation, la plateforme peut enserrer l'aube sans jeu radial, ce qui est bénéfique du point de vue aérodynamique, mais ceci contraint la plateforme à avoir un rayon r supérieur ou égal à la moitié de la corde du profil de la pale 2 en pied.

De manière générale, la plateforme 3 peut avoir un rayon r inférieur à la moitié de la corde du profil de la pale 2 en pied, de sorte qu'il existe un jeu radial entre la plateforme 3 et les points de bords de fuite et de bord d'attaque de la pale 2. Cela peut cependant induire une plus grande perturbation du flux d'air.

Selon un exemple de réalisation préférentiel illustré sur la **figure 3C,** la surface externe de la plateforme 3 est complémentaire avec la forme de la pale 2, de sorte que la plateforme 3 est en contact avec la pale 2 du bord d'attaque de la pale 2 au bord de fuite, et soit également en contact avec l'extrados et l'intrados. Cela permet avantageusement d'éviter la création d'un jeu radial, et de garantir la continuité de forme entre la pale 2 et la plateforme 3. Sur cet exemple illustré sur la figure 3C, il s'agit d'un cas particulier de celui illustré sur la figure 3B dans lequel r=corde/2.

Comme expliqué précédemment, un tel ensemble peut être avantageusement utilisé pour une turbomachine à soufflante carénée, ou pour une turbomachine à soufflante non carénée, de type « open rotor ».

## Revendications

1. Moyeu de turbomachine, destiné à être monté en rotation selon un axe longitudinal (X) de ladite turbomachine (10), ledit moyeu comprenant un corps principal (1) disposé autour de l'axe longitudinal (X), dont une surface externe présente une pluralité de logements ; une pluralité de plateformes (3) comprenant une surface externe délimitée par un bord extérieur circulaire de rayon r, chaque plateforme (3) étant disposée dans un logement correspondant parmi la pluralité de logements du corps principal (1), et destinée à recevoir une pale à calage variable (2) selon un axe de changement de calage (Z), ladite plateforme (3) étant centrée et mobile en rotation selon ledit axe de changement de calage (Z) ; **caractérisé en ce que**,

   cer pour chaque plateforme, au moins une partie de la surface externe de la plateforme (3) et du corps principal (1) du moyeu comprend une courbure définie par une même portion de sphère de rayon R et de centre C, l'au moins une partie étant située au niveau du bord extérieur de la plateforme (3), dans une zone de jonction de la plateforme (3) et du corps principal du moyeu (1),
   le centre C de la sphère étant situé sur l'axe de changement de calage (Z) en dehors d'une zone hémisphérique délimitée entre l'axe longitudinal (X) et la surface externe de la plateforme (3).

2. Moyeu de turbomachine selon la revendication 1, dans lequel la surface externe de la plateforme (3) est entièrement définie par la portion de sphère de rayon R et de centre C.

3. Moyeu de turbomachine selon la revendication 1, dans lequel la zone de jonction est définie par une projection de la zone de jonction dans un plan orthogonal à l'axe de changement de calage (Z), la projection étant une couronne centrée sur l'axe de changement de calage (Z) et délimitée entre un cercle de rayon interne ri inférieur au rayon r du bord extérieur de la plateforme (3), et un cercle de rayon externe re supérieur au rayon r du bord extérieur de la plateforme (3).

4. Moyeu de turbomachine selon la revendication 3, dans lequel la surface externe de chaque plateforme (3) comprend une partie centrale présentant une courbure opposée à la courbure de la surface externe dans la zone de jonction, une projection de la partie centrale dans le plan orthogonal à l'axe de changement de calage (Z) étant délimitée par le cercle de rayon interne ri.

5. Moyeu de turbomachine selon l'une quelconque des revendications 1 à 3, dans lequel le centre C de la sphère définissant la surface externe de chaque plateforme (3) est situé à l'intersection de l'axe de changement de calage (Z) et de l'axe longitudinal (X).

6. Moyeu de turbomachine selon l'une quelconque des revendications 1 à 5, dans lequel le corps principal du moyeu (1) comprend une pluralité de zones intermédiaires situées entre deux zones de jonctions avec des plateformes (3) adjacentes, chaque zone intermédiaire ayant une surface externe présentant une courbure opposée à la courbure de la surface externe du corps principal (1) dans la zone de jonction.

7. Ensemble de turbomachine comprenant un moyeu selon l'une quelconque des revendications précédentes et une pluralité de pales (2) à calage variable configurées pour être raccordées au corps principal du moyeu (1) par l'intermédiaire de la pluralité de plateformes (3).

8. Ensemble selon la revendication 7, dans lequel chaque plateforme (3) de la pluralité de plateformes (3) est réalisée d'une pièce avec la pale (2) correspondante parmi la pluralité de pales (2).

9. Ensemble selon la revendication 7 dans lequel chaque plateforme (3) comprend au moins deux pièces distinctes, destinées à entourer une partie de pied de la pale (2) correspondante.

10. Ensemble selon l'une quelconque des revendications 7 à 9, dans lequel la surface externe de chaque plateforme (3) est complémentaire de la forme de la pale (2) correspondante, de sorte que la plateforme (3) est en contact avec la pale (2) du bord d'attaque de la pale au bord de fuite de la pale (2), et soit également en contact avec l'extrados et l'intrados de la pale (2).

11. Turbomachine à soufflante carénée (10) ou non carénée, comprenant un ensemble selon l'une quelconque des revendications 7 à 10.

## Patentansprüche

1. Turbomaschinennabe, die dazu bestimmt ist, entlang einer Längsachse (X) der Turbomaschine (10) drehbar gelagert zu werden, wobei die Nabe einen um die Längsachse (X) angeordneten Hauptkörper (1) umfasst, dessen Außenfläche eine Vielzahl von Aufnahmen aufweist; wobei eine Vielzahl von Plattformen (3) eine Außenfläche umfasst, die durch eine kreisförmige Außenkante mit dem Radius r begrenzt ist, wobei jede Plattform (3) in einer entsprechenden Aufnahme der Vielzahl von Aufnahmen des Hauptkörpers (1) angeordnet ist und dazu bestimmt ist, eine Schaufel (2) mit variablem Anstellwinkel entlang einer Anstellwinkeländerungsachse (Z) aufzunehmen, wobei die Plattform (3) zentriert und entlang der Anstellwinkeländerungsachse (Z) drehbeweglich ist;

**dadurch gekennzeichnet, dass** für jede Plattform mindestens ein Teil der Außenfläche der Plattform (3) und des Hauptkörpers (1) der Nabe eine Krümmung umfassen, die durch denselben kugelförmigen Abschnitt mit dem Radius R und dem Mittelpunkt C definiert ist, wobei sich der mindestens eine Teil an der Außenkante der Plattform (3) in einer Verbindungszone der Plattform (3) und des Hauptkörpers der Nabe (1) befindet, wobei sich der Mittelpunkt C der Kugel auf der Anstellwinkeländerungsachse (Z) außerhalb einer halbkugelförmigen Zone befindet, die zwischen der Längsachse (X) und der Außenfläche der Plattform (3) begrenzt ist.

2. Turbomaschinennabe nach Anspruch 1, wobei die Außenfläche der Plattform (3) vollständig durch den kugelförmigen Abschnitt mit dem Radius R und dem Mittelpunkt C definiert ist.

3. Turbomaschinennabe nach Anspruch 1, wobei die Verbindungszone durch einen Vorsprung der Verbindungszone in einer Ebene orthogonal zur Anstellwinkeländerungsachse (Z) definiert ist, wobei der Vorsprung ein Ring ist, der auf der Anstellwinkeländerungsachse (Z) zentriert ist und zwischen einem Kreis mit einem Innenradius ri, der kleiner als der Radius r der Außenkante der Plattform (3) ist, und einem Kreis mit einem Außenradius re, der größer als der Radius r der Außenkante der Plattform (3) ist, begrenzt ist.

4. Turbomaschinennabe nach Anspruch 3, wobei die Außenfläche jeder Plattform (3) einen Mittelteil mit einer Krümmung aufweist, die der Krümmung der Außenfläche in der Verbindungszone entgegengesetzt ist, wobei ein Vorsprung des Mittelteils in der Ebene orthogonal zur Anstellwinkeländerungsachse (Z) durch den Kreis mit dem Innenradius ri begrenzt wird.

5. Turbomaschinennabe nach einem der Ansprüche 1 bis 3, wobei sich der Mittelpunkt C der Kugel, die die Außenfläche jeder Plattform (3) definiert, im Schnittpunkt der Anstellwinkeländerungsachse (Z) und der Längsachse (X) befindet.

6. Turbomaschinennabe nach einem der Ansprüche 1 bis 5, wobei der Hauptkörper der Nabe (1) eine Vielzahl von Zwischenzonen umfasst, die sich zwischen zwei Verbindungszonen mit benachbarten Plattformen (3) befinden, wobei jede Zwischenzone eine Außenfläche hat, die eine Krümmung entgegengesetzt zur Krümmung der Außenfläche des Hauptkörpers (1) in der Verbindungszone aufweist.

7. Turbomaschinenbaugruppe, umfassend eine Nabe nach einem der vorhergehenden Ansprüche und eine Vielzahl von Schaufeln (2) mit variablem Anstellwinkel, die so konfiguriert sind, dass sie über die Vielzahl von Plattformen (3) mit dem Hauptkörper der Nabe (1) verbunden sind.

8. Baugruppe nach Anspruch 7, wobei jede Plattform (3) der Vielzahl von Plattformen (3) einstückig mit der entsprechenden Schaufel (2) der Vielzahl von Schaufeln (2) ausgebildet ist.

9. Baugruppe nach Anspruch 7, wobei jede Plattform (3) mindestens zwei separate Teile umfasst, die dazu bestimmt sind, einen Fußteil der entsprechenden Schaufel (2) zu umgeben.

10. Baugruppe nach einem der Ansprüche 7 bis 9, wobei die Außenfläche jeder Plattform (3) komplementär zur Form der entsprechenden Schaufel (2) ist, so dass die Plattform (3) von der Vorderkante des Schaufel bis zur Hinterkante der Schaufel (2) in Kontakt mit der Schaufel (2) und auch in Kontakt mit der Saugseite und der Druckseite der Schaufel (2) steht.

11. Turbomaschine mit einem verkleideten (10) oder unverkleideten Gebläse, die eine Baugruppe nach einem der Ansprüche 7 bis 10 umfasst.

**Claims**

1. Turbomachine hub, intended to be mounted so as to rotate along a longitudinal axis (X) of said turbomachine (10), said hub comprising a main body (1) arranged around the longitudinal axis (X), of which an outer surface has a plurality of housings ; a plurality of platforms (3) comprising an outer surface delimited by a circular outer edge of radius r, each platform (3) being disposed in a corresponding housing of the plurality of housings of the main body (1), and intended to receive a variable pitch blade (2) along a pitch change axis (Z), said platform (3) being centered and able to move in rotation along said pitch change axis (Z);

**characterised in that**, for each platform, at least one part of the outer surface of the platform (3) and of the main body (1) of the hub comprises a curvature defined by the same portion of a sphere of radius R and centre C, the at least one part being located at the level of the outer edge of the platform (3), in a junction zone of the platform (3) and of the main body of the hub (1), the centre C of the sphere being located on the pitch change axis (Z) outside a hemispherical zone delimited between the longitudinal axis (X) and the outer surface of the platform (3).

2. A turbomachine hub as claimed in claim 1, wherein the outer surface of the platform (3) is entirely defined by the portion of a sphere of radius R and centre C.

3. Turbomachine hub according to claim 1, in which the junction zone is defined by a projection of the junction zone in a plane orthogonal to the pitch change axis (Z), the projection being a ring centred on the pitch change axis (Z) and delimited between a circle of inner radius ri less than the radius r of the outer edge of the platform (3), and a circle of outer radius re greater than the radius r of the outer edge of the platform (3).

4. Turbomachine hub according to claim 3, wherein the outer surface of each platform (3) comprises a central portion having a curvature opposite to the curvature of the outer surface in the junction zone, a projection of the central portion in the plane orthogonal to the pitch change axis (Z) being delimited by the circle of inner radius ri.

5. A turbomachine hub according to any one of claims 1 to 3, wherein the centre C of the sphere defining the outer surface of each platform (3) is located at the intersection of the pitch change axis (Z) and of the longitudinal axis (X).

6. A turbomachine hub according to any one of claims 1 to 5, wherein the main body of the hub (1) comprises a plurality of intermediate zones located between two junction zones with adjacent platforms (3), each intermediate zone having an outer surface with a curvature opposite to the curvature of the outer surface of the main body (1) in the junction zone.

7. A turbomachine assembly comprising a hub according to any one of the preceding claims and a plurality of variable pitch blades (2) configured to be connected to the hub main body (1) by means of the plurality of platforms (3).

8. An assembly according to claim 7, wherein each platform (3) of the plurality of platforms (3) is made in one piece with the corresponding one of the plurality of blades (2).

9. Assembly according to claim 7 in which each platform (3) comprises at least two distinct parts, intended to surround a foot part of the corresponding blade (2).

10. An assembly according to any one of claims 7 to 9, wherein the outer surface of each platform (3) is complementary to the shape of the corresponding blade (2), so that the platform (3) is in contact with the blade (2) from the leading edge of the blade to the trailing edge of the blade (2), and is also in contact with the upper and lower surface of the blade (2).

11. Turbomachine with a shrouded (10) or unshrouded fan, comprising an assembly according to any one of claims 7 to 10.

[Fig. 1]

Fig. 1

[Fig. 2]

Fig. 2

[Fig. 3a]

Fig. 3A

[Fig. 3b]

Fig. 3B

[Fig. 3c]

Fig. 3C

[Fig. 4]

Fig. 4

[Fig. 5]

Fig. 5

[Fig. 6a]

Fig. 6A

[Fig. 6b]

Fig. 6B

[Fig. 7]

Fig. 7

[Fig. 8]

Fig. 8

[Fig. 9]

Fig. 9

**EP 4 025 789 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3048228
- US 2018073375 A